# EUROPÄISCHE PATENTSCHRIFT

(11) **EP 3 566 034 B1**
(45) Veröffentlichungstag und Bekanntmachung des Hinweises auf die Patenterteilung: **30.11.2022**
(21) Anmeldenummer: 17791399.3
(22) Anmeldetag: 30.10.2017
(51) Int. Cl.: G01K 7/02, G01K 15/00

(54) **VORRICHTUNG UND VERFAHREN ZUR IN SITU KALIBRIERUNG EINES THERMOMETERS**
DEVICE AND METHOD FOR THE IN SITU CALIBRATION OF A THERMOMETER
DISPOSITIF ET PROCÉDÉ D'ÉTALONNAGE IN SITU D'UN THERMOMÈTRE

(30) Priorität: 09.01.2017 DE 102017100268
(43) Veröffentlichungstag der Anmeldung: 13.11.2019
(73) Patentinhaber: Endress+Hauser Wetzer GmbH+Co. KG, 87484 Nesselwang (DE)
(72) Erfinder: KORN, Michael, 87616 Marktoberdorf (DE); UMKEHRER, Alfred, 87659 Hopferau (DE)
(74) Vertreter: Koslowski, Christine Adelheid
(86) Internationale Anmeldenummer: PCT/EP2017/077748
(87) Internationale Veröffentlichungsnummer: WO 2018/127313

(56) Entgegenhaltungen:
- DE-A1-102010 040 039
- DE-T2- 69 733 138

## Beschreibung

Die Erfindung bezieht sich auf eine Vorrichtung zur Bestimmung und/oder Überwachung der Temperatur eines Mediums umfassend zumindest einen ersten Temperatursensor und ein Referenzelement und zumindest drei Anschlussleitungen. Ferner bezieht sich die vorliegende Erfindung auf ein Verfahren zur in situ Kalibrierung und/oder Validierung einer erfindungsgemäßen Vorrichtung.

Die Kalibrierung von Thermometern wird heutzutage üblicherweise in Kalibrierbädern, Öfen oder Fixpunkteinrichtungen durchgeführt. Eine entsprechende Fixpunktzelle ist beispielsweise in der Patentschrift DE102004027072B3 beschrieben. Allerdings muss bei diesen Methoden üblicherweise das Thermometer aus der jeweiligen Messstelle ausgebaut werden. Um ein Thermometer dagegen im eingebauten Zustand kalibrieren zu können, ist aus der DE19941731A1 eine miniaturisierte und in ein Thermometer integrierte, mit einer Fixpunktsubstanz, z. B. einem Metall oder einer eutektischen Legierung, gefüllten Fixpunktzelle bekannt geworden. In diesem Falle ist jedoch eine zusätzliche Zelle zum Kapseln der Fixpunktsubstanz erforderlich, was die Dynamik des Sensors, insbesondere die Ansprechzeit auf eine Temperaturänderung, verschlechtert. Außerdem kann es gegebenenfalls passieren, dass die Fixpunktsubstanz aus der Zelle austritt, was zu einer Beschädigung oder sogar zu einer Zerstörung des Thermometers führen kann.

Es wäre somit wünschenswert, eine Kalibrierung und/oder Validierung eines Thermometers im eingebauten Zustand, also in situ, durchführen zu können, bei welcher die genannten Nachteile nicht auftreten.

Im Prinzip lassen sich zur Bestimmung einer Temperatur verschiedenste physikalische und/oder chemische spezifische temperaturabhängige Materialeigenschaften ausnutzen. Dabei kann es sich entweder um eine an einem bestimmten charakteristischen Temperaturpunkt auftretende, insbesondere abrupte, Änderung der jeweiligen Eigenschaften oder auch um eine kontinuierliche Änderung dieser Eigenschaft in Form einer charakteristischen Kennlinie handeln. Beispielsweise stellt die Curie-Temperatur eines ferromagnetischen Materials einen charakteristischen Temperaturpunkt für dieses Material dar. In dieser Hinsicht ist aus der DE 4032092C2 ein Verfahren zur Ermittlung der Curie-Temperatur bekannt geworden, bei welchem mittels eines Differential-Scanning-Thermoanalysators eine abrupte Änderung der aufgenommenen Wärmemenge im Bereich der Curie-Temperatur festgestellt wird. In der DE19702140A1 wiederum werden eine Vorrichtung und ein Verfahren zur Messung der Temperatur eines rotierenden Trägerteils beschrieben mit einem Temperaturfühler, welcher einen ferro- oder paramagnetischen Werkstoff aufweist, der im jeweils interessanten Temperaturbereich eine temperaturabhängige Änderung seiner Polarisation zeigt. Es wird also eine Kennlinie der temperaturabhängigen Polarisation zur Bestimmung der Temperatur herangezogen.

Ein weiteres Beispiel, welches aus der DE19805184A1 bekannt geworden ist, beschreibt die Ermittlung der Temperatur eines piezoelektrischen Elements anhand seiner Kapazität. Ähnlich bezieht sich die Patentschrift DE69130843T2 auf ein Verfahren und eine Vorrichtung zur Bestimmung der Temperatur eines piezoelektrischen Kristalloszillators. Das Heranziehen bestimmter charakteristischer Temperaturpunkte oder Kennlinien eignet sich grundsätzlich auch zur Kalibrierung und/oder Validierung von Thermometern.

So ist in der EP1247268B2 beispielsweise ein Verfahren zur in situ Kalibrierung mehrerer integrierter Temperatursensoren anhand von Kennlinien eines oder mehrerer Referenzelemente in Form von sekundären Temperatursensoren beschrieben, welche Referenzelemente in einen Thermometereinsatz zusätzlich zu einem primären Temperatursensor eingebaut sind. Damit eine Kalibrierung erfolgen kann, unterscheiden sich die jeweils verwendeten Referenzelemente in Bezug auf den Aufbau und/oder das jeweils verwendete Material vom primären Temperatursensor, was in unterschiedlichen Kennlinienverläufen resultiert. Nachteilig hierbei ist jedoch, dass üblicherweise auch die Kennlinien der Referenzelemente Alterungseffekten und/oder Sensordrift unterliegen.

Weiterhin betrifft DE 69733138T2 ein selbstüberprüfendes Thermometer mit einem Impedanzelement und einer Vielzahl an Thermopaaren, welche an verschiedenen Positionen des Impedanzelements gekoppelt werden.

Zur Vermeidung derartiger Nachteile sind aus der DE102010040039A1 eine Vorrichtung und ein Verfahren zur in situ Kalibrierung eines Thermometers mit einem Temperatursensor und einem Referenzelement zur Kalibrierung des Temperatursensors bekannt geworden, bei welcher das Referenzelement wenigstens teilweise aus einem ferroelektrischen Material besteht, welches im zur Kalibrierung des Temperatursensors relevanten Temperaturbereich eine Phasenumwandlung bei zumindest einer vorgegebenen Temperatur erfährt. Die Kalibrierung wird also anhand des charakteristischen Temperaturpunkts eines Phasenübergangs eines ferroelektrischen Materials, also anhand einer materialspezifischen Eigenschaft vorgenommen. Je nach Anzahl der verbauten Referenzelemente kann auf diese Weise sowohl eine sogenannte 1-Punkt- als auch eine Mehrpunkt- Kalibrierung und/oder Validierung vorgenommen werden. Eine ähnliche, insbesondere für Mehrpunkt-Kalibrierungen geeignete Vorrichtung, ist ferner aus der bisher unveröffentlichten deutschen Patentanmeldung mit dem Aktenzeichen 102015112425.4 bekannt geworden. Das dort beschriebene Thermometer umfasst zumindest einen Temperatursensor und zumindest zwei über genau zwei Anschlussdrähte kontaktierte Referenzelemente, welche zumindest teilweise aus zwei unterschiedlichen Materialien bestehen, für welche Materialien jeweils im zur Kalibrierung des Temperatursensors relevanten Temperaturbereich zumindest ein Phasenübergang zumindest zweiter Ordnung bei jeweils einer vorgegebenen Phasenübergangstemperatur auftritt.

Für Anwendungen einer entsprechenden Vorrichtung mit einem Temperatursensor und zumindest einem Referenzelement in einem zumindest teilweise und/oder zeitweise dynamischen und/oder inhomogenen thermischen Umfeld kann es allerdings dazu kommen, dass der Temperatursensor und das Referenzelement nicht zu jedem Zeitpunkt im thermischen Gleichgewicht sind. Die mittels des Temperatursensors gemessene Temperatur entspricht dann zumindest zeitweise nicht einer jeweils zeitgleich gemessenen Temperatur des Referenzelements. Dies kann nachteilig zu Fehlern und/oder Ungenauigkeiten bei einer Kalibrierung und/oder Validierung des Temperatursensors mittels des Referenzelements führen.

Der vorliegenden Erfindung liegt die Aufgabe zugrunde, eine Vorrichtung zur Bestimmung und/oder Überwachung der Temperatur eines Mediums mit einer hohen Messgenauigkeit, sowie ein Verfahren zu deren Herstellung, bereitzustellen.

Diese Aufgabe wird gelöst durch eine Vorrichtung zur Bestimmung und/oder Überwachung der Temperatur eines Mediums nach Anspruch 1 sowie durch ein Verfahren zur in situ Kalibrierung und/oder Validierung einer erfindungsgemäßen Vorrichtung nach Anspruch 11.

Das erfindungsgemäße Thermometer ist vorteilhaft für eine in situ Kalibrierung und/oder Validierung zumindest des ersten Temperatursensors ausgestaltet. Hierzu wird der Temperatursensor (Primärsensor) mit Hilfe eines Sekundärsensors (Referenzelement) kalibriert und/oder validiert.

Bei einem Phasenübergang in einem Material, welches Material in der festen Phase verbleibt, handelt es sich beispielsweise nach der Ehrenfestklassifikation um einen Phasenübergang zumindest zweiter Ordnung. Im Unterschied zu einem Phasenübergang erster Ordnung wird keine oder nur eine vernachlässigbare Menge latenter Wärme während des Phasenübergangs frei. Wenn keine oder nur eine vernachlässigbare Menge an latenter Wärme frei wird, kann - grundsätzlich und unabhängig von der gewählten Klassifikation für Phasenübergänge unter anderem vorteilhaft gewährleistet werden, dass die mittels des Temperatursensors gemessene Temperatur zum Zeitpunkt des Auftretens eines Phasenübergangs, nicht, insbesondere nicht durch frei werdende latente Wärme, verfälscht wird.

In einer weiteren, heute deutlich gebräuchlicheren Klassifizierung von Phasenübergängen wird lediglich zwischen diskontinuierlichen (1. Ordnung) und kontinuierlichen (2. Ordnung) Phasenübergängen unterschieden [s. z. B. Lexikon der Physik, Spektrum Akademischer Verlag Heidelberg Berlin, Band 4 unter dem Stichwort "Phasenübergänge und andere kritische Phänomene]. Nach dieser Klassifikation wiederum lassen sich beispielsweise verschiedenen ferroelektrischen Materialien sowohl Phasenübergänge 1. als auch 2. Ordnung zuordnen, wobei in beiden Fällen das jeweilige Material, für das ein Phasenübergang stattfindet, während des Phasenübergangs in der festen Phase verbleibt.

Ein Phasenübergang beinhaltet eine Unstetigkeit in der zweiten Ableitung einer thermodynamischen Größe wie beispielsweise dem Druck, dem Volumen, der Enthalpie, oder der Entropie als Funktion beispielsweise der Temperatur. Üblicherweise gehen Phasenübergänge mit der Änderung einer bestimmten spezifischen Materialeigenschaft einher, beispielsweise mit einem Wechsel der Kristallstruktur, oder einem Wechsel in den magnetischen, elektrischen oder dielektrischen Eigenschaften. Diese materialspezifischen Änderungen sind für das jeweilige Referenzelement bekannt und können für eine Kalibrierung und/oder Validierung eines Temperatursensors herangezogen werden. Dabei kann das zumindest eine Referenzelement einen oder mehrere Phasenübergänge, insbesondere Phasenübergänge in der festen Phase des jeweils verwendeten Materials, aufweisen. Jeder Phasenübergang findet bei einem bestimmten charakteristischen fixen und langzeitstabilen Temperaturwert statt, so dass für das Referenzelement im Prinzip keine Drift und/oder keine Alterungseffekte berücksichtigt werden müssen.

Zumindest das den ersten Temperatursensor bildende erste Thermoelement ist erfindungsgemäß in unmittelbarer Umgebung zum Referenzelement angeordnet. Die das erste Thermoelement bildenden Anschlussleitungen bestehen entsprechend aus unterschiedlichen Materialien. Die Funktionsweise eines Thermoelements ist dem Fachmann hinlänglich bekannt und wird deshalb an dieser Stelle nicht detailliert erläutert. Die Temperatur wird mittels eines Thermoelements anhand einer zwischen zwei aus unterschiedlichen Materialien bestehenden Thermodrähten, welche für die erfindungsgemäße Vorrichtung durch zwei Anschlussleitungen gegeben sind, auftretenden Thermospannung bestimmt. Die beiden Thermodrähte sind hierzu an einem, im Folgenden als Messpunkt bezeichneten Ort, an welchem die Temperatur bestimmt werden soll, miteinander verbunden. Bei dem Thermoelement handelt es sich insbesondere um ein Thermoelement nach der DIN Norm IES584, beispielsweise um ein Thermoelement des Typs K, J, N, S, R, B, T, oder E. Aber auch andere Materialpaare, beispielsweise solche, die einen messbaren Seebeck-Effekt aufweisen, sind möglich und fallen unter die vorliegende Erfindung.

Vorteilhaft zeichnet sich die erfindungsgemäße Vorrichtung durch eine besonders kompakte Bauweise, bzw. durch einen besonders einfachen konstruktiven Aufbau, aus. Das Referenzelement und der Temperatursensor sind vorteilhaft in unmittelbarer Nähe voneinander angeordnet. Dies erlaubt eine besonders genaue Kalibrierung und/oder Validierung zumindest des ersten Temperatursensors. Insbesondere für Anwendungen in einem zumindest teilweise und/oder zeitweise dynamischen und/oder inhomogenen thermischen Umfeldes ist gewährleistet, dass der Temperatursensor und das Referenzelement zu jedem Zeitpunkt im Wesentlichen im thermischen Gleichgewicht sind. Durch eine inhomogene Wärmeausbreitung hervorgerufene, insbesondere zeitlich begrenzte, Temperaturunterschiede für verschiedene Positionen innerhalb des Sensorkopfes, wie es beispielsweise bei Anwendungen in einem, insbesondere in einem Rohr, strömenden Medium der Fall sein kann, können im Wesentlichen vermieden werden. Wird zu einem bestimmten Zeitpunkt das Auftreten eines Phasenüberganges innerhalb des Referenzelements detektiert, entspricht eine im Wesentlichen zum gleichen Zeitpunkt mittels des Temperatursensors gemessene Temperatur, im Wesentlichen der Phasenübergangstemperatur. Somit gewährleistet die erfindungsgemäße Vorrichtung eine hohe Messgenauigkeit sowie eine besonders hohe Genauigkeit bei einer Kalibrierung und/oder Validierung des Temperatursensors.

Erfindungsgemäß ist an dem Referenzelement zumindest eine erste und eine zweite elektrisch leitfähige Elektrode angeordnet, welche erste und zweite Elektrode elektrisch voneinander elektrisch isoliert sind, und wobei die erste Anschlussleitung die erste Elektrode, insbesondere elektrisch, kontaktiert, und wobei die zweite Anschlussleitung die zweite Elektrode, insbesondere elektrisch, kontaktiert.

Die Elektroden sind bevorzugt entlang der Oberfläche des Referenzelements auf dieses aufgebracht. Hierzu eignet sich beispielsweise ein Sputter- oder Dickschichtprozess. Alternativ können die zwei Elektroden auch in Form zweier elektrisch leitfähiger Plättchen ausgestaltet sein, zwischen welchen das Referenzelement angeordnet ist. Im Falle einer Ausgestaltung des Referenzelements als Körper mit mehreren Oberflächenstücken, beispielsweise in Form eines Quaders, können die zumindest zwei Elektroden dabei entweder im Bereich desselben Oberflächenstücks oder im Bereich unterschiedlicher Oberflächenstücke angeordnet sein. Das Referenzelement ist ferner über zumindest zwei, jeweils eine der zumindest zwei Elektroden kontaktierende, Anschlussleitungen, insbesondere elektrisch, kontaktiert. Dabei können die Materialien, aus welchen die zumindest zwei Elektroden und/oder die Anschlussleitungen jeweils bestehen, für alle diese Komponenten oder für eine Teilmenge der genannten Komponenten, jeweils sowohl gleich als auch unterschiedlich sein.

In einer vorteilhaften Ausgestaltung der erfindungsgemäßen Vorrichtung handelt es sich dem zumindest einen Material, aus welchem das Referenzelement zumindest teilweise besteht, um ein ferroelektrisches Material, um ein ferromagnetisches Material, oder um ein supraleitendes Material, insbesondere um einen Hochtemperatursupraleiter.

Eine weitere Ausgestaltung beinhaltet, dass es sich bei dem zumindest einen Material, aus welchem das Referenzelement zumindest teilweise besteht um eine Legierung, insbesondere um LiNbO3, NaNbO3, KNO3, Pb(0.5Sc0.5Nb)O3, Pb(0.33Mg0.67Nb)O3, Pb(0.33Zn0.67Nb)O3, LiTaO3, PbTa2O6, Pb(0.5Fe0.5Ta)O3, SrBi2Ta2O9, Sm(MoO4)3, Eu2(MoO4)3, Pb5GeO11, SrTeO3, PbZrO3-PbTiO3, BaTiO3, oder einen Mischkristall, beispielsweise BaTiO3-PbTiO3, handelt.

Gemäß einer besonders bevorzugten Ausgestaltung ist die dritte Anschlussleitung derart angeordnet, dass sie mit der ersten oder zweiten Elektrode elektrisch kontaktiert ist. Das erste Thermoelement wird folglich aus der ersten und dritten oder aus der zweiten und dritten Anschlussleitung gebildet, wobei die beiden das erste Thermoelement bildenden Anschlussleitungen im Bereich einer der Elektroden des Referenzelements miteinander verbunden sind. Der Messpunkt befindet sich also direkt am Referenzelement, bzw. an einer Elektrode des Referenzelements. Entsprechend lässt sich mittels des Temperatursensors im Wesentlichen die Temperatur des Referenzelements, insbesondere die Temperatur im Bereich einer der Elektroden und/oder einer Oberfläche des Referenzelements, bestimmen. Die mittels des Temperatursensors ermittelte Temperatur entspricht also zu jedem Zeitpunkt im Wesentlichen der Temperatur des Referenzelements.

Gemäß einer weiteren bevorzugten Ausgestaltung ist eine vierte Anschlussleitung vorgesehen, welche aus einem Material besteht, welches sich zumindest von dem Material der ersten oder der zweiten Anschlussleitung unterscheidet, wobei die vierte Anschlussleitung im Falle, dass die dritte Anschlussleitung die erste Elektrode kontaktiert, die zweite Elektrode, insbesondere elektrisch, kontaktiert, und im Falle, dass die dritte Anschlussleitung die zweite Elektrode kontaktiert, die erste Elektrode, insbesondere elektrisch, kontaktiert. Die beiden jeweils die gleiche Elektrode, insbesondere elektrisch, kontaktierenden Anschlussleitungen bilden dann den ersten Temperatursensor in Form des ersten Thermoelements und einen zweiten Temperatursensor in Form eines zweiten Thermoelements.

Es handelt sich bei dieser Ausgestaltung um ein Doppel-Thermoelement, mittels welchem beispielsweise eine redundante Temperaturerfassung möglich ist. Diese Ausgestaltung ist besonders bevorzugt für Anwendungen bei hohen Temperaturen, insbesondere T>300°C. Hier kann es, bedingt durch das einem Thermoelement zugrundeliegende Messprinzip, zu einer Drift bei der Temperaturbestimmung kommen. Die Thermospannung wird nämlich über die gesamte Länge der Thermodrähte erzeugt, wobei Bereiche der Thermodrähte, in welchen ein vergleichsweise großer Temperaturgradienten pro Längeneinheit auftritt, einen besonders großen Beitrag zur Thermospannung geben. Dieser Einfluss kann durch eine redundante Temperaturerfassung minimiert werden.

Bevorzugt kann eine erfindungsgemäße Vorrichtung mit zwei Temperatursensoren sogenanntes Doppelmantel-Thermoelement, ausgeführt werden. Die vier die zwei Thermoelemente und die zwei, insbesondere elektrischen, Kontakte der zumindest zwei Elektroden des Referenzelements bildenden Anschlussleitungen werden dann in derselben Mantelleitung geführt. Dies ermöglicht eine besonders kompakte und kostengünstige Bauweise.

Eine weitere Ausgestaltung der Erfindung beinhaltet, dass zumindest ein dritter Temperatursensor mit zumindest einer fünften Anschlussleitung zur elektrischen Kontaktierung des dritten Temperatursensors, welcher dritte Temperatursensor der Bestimmung der Temperatur des Mediums dient, vorgesehen ist. Dieser dritte Temperatursensor ermöglicht ebenfalls eine redundante Temperaturerfassung. Im Gegensatz zum ersten und ggf. zweiten durch das erste und ggf. zweite Thermoelement gebildeten Temperatursensor muss es sich beim dritten Temperatursensor nicht zwingend um ein Thermoelement handeln. Vielmehr sind alle erdenklichen, dem Fachmann bekannten Temperatursensoren möglich. Bevorzugt handelt es sich bei dem dritten Temperatursensor jedoch um ein Widerstandselement, beispielsweise um ein zumindest teilweise aus Platin bestehendes Widerstandselement. Das Widerstandselement ist vorzugsweise in Form einer dünnen Schicht oder Beschichtung ausgestaltet und beispielsweise direkt auf einen Teilbereich des Referenzelements oder auf ein Trägersubstrat, aufgebracht. Der dritte Temperatursensor kann dabei grundsätzlich sowohl separat von dem Referenzelement als auch in direktem Kontakt zum Referenzelement angeordnet sein.

Es ist von Vorteil, wenn der dritte Temperatursensor und das zumindest eine Referenzelement in einem einzigen Sensorkopf angeordnet sind.

Es ist ebenso von Vorteil, wenn die dritte Anschlussleitung als Verbindungsleitung, welche eine der beiden Elektroden und den dritten Temperatursensor, insbesondere elektrisch, kontaktiert, ausgestaltet ist. Dies ermöglicht eine besonders einfache, insbesondere elektrische, Kontaktierung der Temperatursensoren und des Referenzelements. Hierbei ist es insbesondere von Vorteil, wenn die dritte Anschlussleitung aus dem gleichen Material besteht wie die fünfte, erste, oder zweite Anschlussleitung.

Die der vorliegenden Erfindung zugrunde liegende Aufgabe wird ferner gelöst durch ein Verfahren zur in situ Kalibrierung und/oder Validierung einer erfindungsgemäßen Vorrichtung. Dabei umfasst das erfindungsgemäße Verfahren folgende Verfahrensschritte:
- Ermitteln zumindest eines Phasenübergangs-Zeitpunkts, zu welchem zumindest eine Phasenübergangstemperatur des Referenzelements erreicht wird,
- Ermitteln eines ersten mittels des ersten Temperatursensors gemessenen ersten Temperatur-Messwerts, welcher zu einem ersten Mess-Zeitpunkt gemessen wird/wurde, der den kürzesten zeitlichen Abstand zum Phasenübergangs-Zeitpunkt aufweist, und
- Kalibrierung und/oder Validierung des ersten Temperatursensors anhand eines Vergleichs der zumindest einen Phasenübergangstemperatur mit dem ersten Temperatur-Messwert.

Es versteht sich von selbst, dass im Falle, dass das Referenzelement mehr als einen Phasenübergang aufweist und/oder im Falle, dass mehr als ein Referenzelement vorgesehen ist, das erfindungsgemäße Verfahren in analoger Weise auch für die weiteren Phasenübergänge mit den weiteren charakteristischen Phasenübergangstemperaturen anwendbar ist. In diesem Falle kann ein Abgleich der Kennlinie zumindest des ersten Temperatursensors über weite Temperaturbereiche, insbesondere über Abschnitte unterschiedlicher Steigungen der Kennlinie, erfolgen.

In einer vorteilhaften Ausgestaltung, welches insbesondere für den Fall, dass die erfindungsgemäße Vorrichtung über vier Anschlussleitungen verfügt, umfasst das Verfahren zusätzlich folgende Verfahrensschritte:
- Ermitteln eines mittels des zweiten Temperatursensors gemessenen zweiten Temperatur-Messwerts, welcher zu einem zweiten Mess-Zeitpunkt gemessen wird/wurde, der den kürzesten zeitlichen Abstand zum Phasenübergangs-Zeitpunkt aufweist,
- Kalibrierung und/oder Validierung des zweiten Temperatursensors anhand eines Vergleichs der zumindest einen Phasenübergangstemperatur mit dem ersten und/oder zweiten Temperatur-Messwert, und
- Bestimmen der Temperatur des Mediums anhand des ersten und/oder zweiten Temperatur-Messwerts oder anhand eines Mittelwerts des ersten und zweiten Temperatur-Messwerts.

In einer weiteren vorteilhaften Ausgestaltung des Verfahrens, welche besonders geeignet ist für eine erfindungsgemäße Vorrichtung mit zumindest einem dritten Temperatursensor umfasst das Verfahren zusätzlich folgende Verfahrensschritte:
- Ermitteln eines mittels des dritten Temperatursensors gemessenen dritten Temperatur-Messwerts, welcher zu einem dritten Mess-Zeitpunkt gemessen wird/wurde, der den kürzesten zeitlichen Abstand zum Phasenübergangs-Zeitpunkt aufweist,
- Kalibrierung und/oder Validierung des dritten Temperatursensors anhand eines Vergleichs der zumindest einen Phasenübergangstemperatur mit dem ersten, zweiten und/oder dritten Temperatur-Messwert, und
- Bestimmen der Temperatur des Mediums anhand des ersten zweiten und/oder dritten Temperatur-Messwerts oder anhand eines Mittelwerts des ersten, zweiten und/oder dritten Temperatur-Messwerts.

Bei dieser Ausgestaltung ist es von Vorteil, wenn zur Kalibrierung und/oder Validierung des dritten Temperatursensors anhand eines Vergleichs der zumindest einen Phasenübergangstemperatur mit dem dritten Temperatur-Messwert eine gegebenenfalls bestehende Abweichung zwischen dem mittels des ersten und/oder zweiten Temperatursensors gemessenen ersten und/oder zweiten Temperatur-Messwerts berücksichtigt wird.

Die in Zusammenhang mit der Vorrichtung erläuterten Ausgestaltungen lassen sich mutatis mutandis auch auf das vorgeschlagene Verfahren anwenden und umgekehrt. Die Erfindung wird anhand der nachfolgenden Zeichnungen näher erläutert. Gleiche Elemente der Vorrichtung sind jeweils mit demselben Bezugszeichen versehen. Es zeigt:
Fig. 1: eine schematische Darstellung eines Thermometers mit einem Temperatursensor und einem separat kontaktierten Referenzelement zur Bestimmung und/oder Überwachung der Temperatur eines strömenden Mediums gemäß Stand der Technik,
Fig. 2:eine erste Ausgestaltung einer erfindungsgemäßen Vorrichtung mit einem erfindungsgemäßen Temperatursensor und einem Referenzelement,
Fig. 3: eine zweite Ausgestaltung einer erfindungsgemäßen Vorrichtung mit zwei erfindungsgemäßen Temperatursensoren und einem Referenzelement, und
Fig. 4 eine dritte Ausgestaltung einer erfindungsgemäßen Vorrichtung mit zwei erfindungsgemäßen Temperatursensoren und einem Referenzelement, und
Fig.5 eine Illustrierung einer Temperaturbestimmung bzw. einer Kalibrierung und/oder Validierung anhand einer Vorrichtung gemäß Fig. 4.

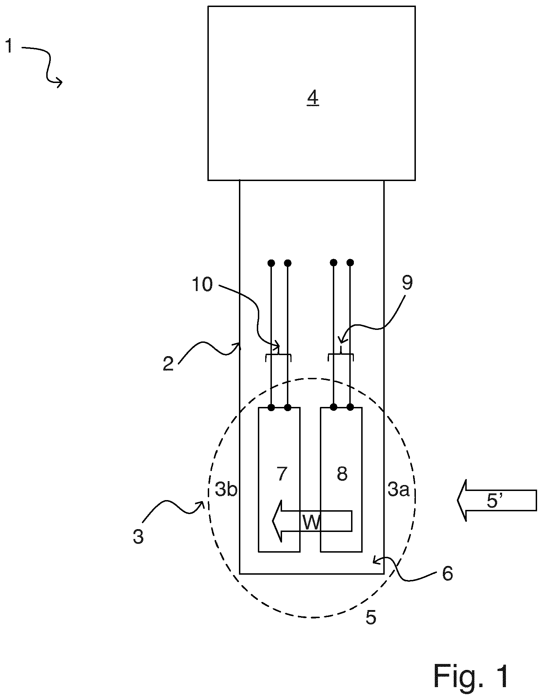

In Fig.1 ist eine schematische Abbildung eines Thermometers 1 mit einem Schutzrohr 2 und einer Elektronikeinheit 3 gemäß Stand der Technik gezeigt. Der dem jeweiligen Medium 5 zugewandte Teilbereich des Schutzrohres 2 wird auch als Sensorkopf 3 bezeichnet. Das Innenvolumen des Sensorkopfes 3 ist mit einem, insbesondere elektrisch isolierenden, Füllstoff 6, insbesondere einem Zement, gefüllt. Ferner sind im Inneren des Sensorkopfes 3 ein Temperatursensor 7 und ein Referenzelement 8 angeordnet, welche jeweils mittels zwei Anschlussdrähten, 9,10, insbesondere elektrisch, kontaktiert und mit der Elektronikeinheit 4 verbunden sind. Bei dem Temperatursensor 7 handelt es sich beispielsweise um ein Widerstandselement oder um ein Thermoelement. Das Referenzelement 8 wiederum besteht zumindest teilweise aus einem Material, für welches Material innerhalb des für den Betrieb der Vorrichtung relevanten Temperaturbereichs zumindest ein Phasenübergang zumindest zweiter Ordnung bei zumindest einer vorgegebenen Phasenübergangstemperatur auftritt. Die Anzahl der notwendigen Anschlussdrähte 9,10 zur Kontaktierung des Referenzelements und des Temperatursensors 7,8 kann je nach Art des angewendeten Messprinzips variieren. In der gezeigten Ausgestaltung sind der Temperatursensor 7 und das Referenzelement 8 voneinander beabstandet innerhalb des Sensorkopfes 3 angeordnet. Sie können aber ebenfalls in direktem Kontakt miteinander stehen und beispielsweise miteinander verlötet sein.

Zum Zwecke einer hohen Messgenauigkeit gilt es zu gewährleisten, dass der Temperatursensor und das Referenzelement im Idealfall zu jedem Zeitpunkt im thermischen Gleichgewicht sind. Um dies zu erreichen, werden üblicherweise verschiedene Maßnahmen durchgeführt, von denen einige im Folgenden beispielhaft aufgelistet sind:
1 . Der Temperatursensor 7 und das Referenzelement 8 sind innerhalb des Sensorkopfes 3 symmetrisch, insbesondere symmetrisch zu einer gedachten in Längsrichtung des Schutzrohres 2 durch einen Mittelpunkt des Schutzrohres 2 verlaufenden Achse, angeordnet.
2. Der Temperatursensor 7 und das Referenzelement 8 sind möglichst gut thermisch gekoppelt (z.B. verlötet).
3. Ggf. für den Temperatursensor 7 und/oder das Referenzelement verwendete Trägersubstrate weisen im Wesentlichen dieselbe thermische Leitfähigkeit auf.
4. Der Temperatursensor 7 und das Referenzelement 8 sind derart ausgestaltet, dass sie im Wesentlichen dieselbe thermische Kapazität aufweisen.
5. Der Füllstoff 6 und/oder im Bereich des Sensorkopfes 3 angeordnete Trennwände [nicht eingezeichnet] sind derart beschaffen, dass sie eine isotrope und/oder homogene Wärmeausbreitung innerhalb des Sensorkopfes 3 gewährleisten.
6. Alle Komponenten zumindest des Sensorkopfes 3 sind derart ausgestaltet, dass sie eine möglichst hohe thermische Leitfähigkeit aufweisen

Selbst bei größter Sorgfalt in Bezug auf die Herstellung eines Thermometers 1 mit zumindest zwei in einem einzigen Sensorkopf 3 angeordneten Messelementen 7,8 können jedoch verschiedene Fälle auftreten, in welchen der Temperatursensor 7 und das Referenzelement 8 zumindest zeitweise nicht im thermischen Gleichgewicht sind und entsprechend unterschiedlichen Temperaturen ausgesetzt sind. Dies wiederum kann zu erheblichen Fehlern und/oder Messungenauigkeiten bei einer Kalibrierung und/oder Validierung des Temperatursensors mittels des Referenzelements führen.

Eine Möglichkeit hierfür ist ein Einsatz des Thermometers 1 in einem zumindest zeitweise und/oder teilweise dynamischen und/oder inhomogenen thermischen Umfeld, wie beispielsweise für ein strömendes Medium 5'.

Eine Temperaturänderung des strömenden Mediums 5' von einer ersten Temperatur T₁ zu einer zweiten Temperatur T₂ führt zu einer asymmetrischen Wärmeausbreitung W innerhalb des Sensorkopfes 3. Ein der Strömungsrichtung des Mediums 5 zugewandter Teilbereich 3a des Sensorkopfes 3 erreicht zu einem früheren Zeitpunkt die zweite Temperatur T₂ als ein der Strömungsrichtung des Mediums 5 abgewandter Teilbereich 3b des Sensorkopfes 3. Somit erreicht das Referenzelement 8 zu einem früheren Zeitpunkt die zweite Temperatur T₂ als der Temperatursensor 7.

Bei Einsatz des Thermometers 1 in einem stationären thermischen Umfeld dagegen würde die Wärmeausbreitung W von der dem Medium 5 zugewandten Oberfläche des Sensorkopfes 3 ausgehend ins Innere des Sensorkopfes 3 stattfinden. Es sei darauf verwiesen, dass im Kontext der vorliegenden Erfindung unter dem Begriff Wärmeausbreitung W in diesem Zusammenhang sowohl ein Wärmefluss vom Medium 5 zum Sensorkopf 3, entsprechend dem Falle, dass das Medium 5 eine höhere Temperatur aufweist als der Sensorkopf 3, als auch in umgekehrter Richtung, im Falle, dass der Sensorkopf 3 eine höhere Temperatur aufweist, verstanden wird.

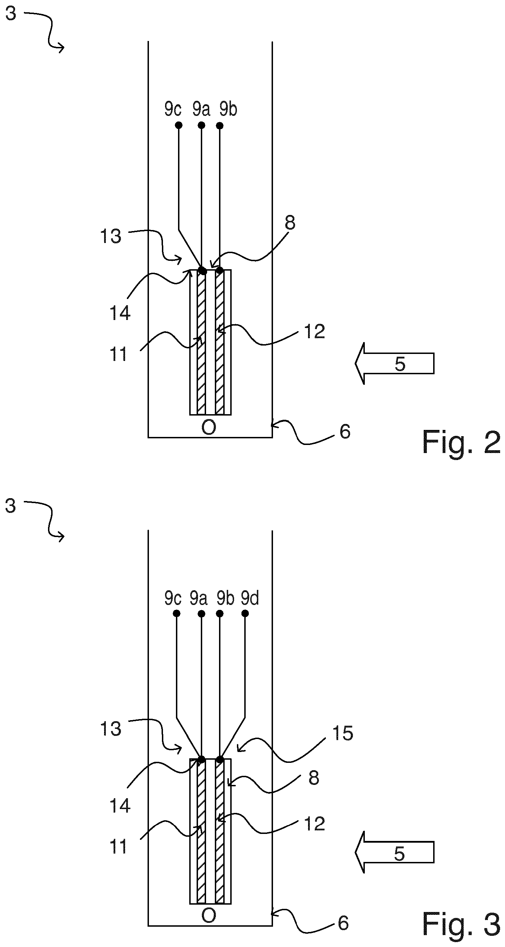

Diese beispielhaft illustrierte Problematik und die damit einhergehenden Fehler für eine Kalibrierung und/oder Validierung des Temperatursensors 7 mittels des Referenzelements 8 können mittels der vorliegenden Erfindung vermieden werden. Hierzu werden im Folgenden beispielhaft drei vorteilhafte Ausgestaltungen der vorliegenden Erfindung anhand der Figuren Fig. 2 - Fig. 4 erläutert. Es sei darauf verwiesen, dass diese Ausgestaltungen beliebig miteinander kombinierbar sind. Ferner versteht es sich von selbst, dass neben den hier gezeigten Ausgestaltungen viele weitere Ausgestaltungen denkbar sind, welche ebenfalls unter die vorliegende Erfindung fallen.

In Fig. 2 ist eine erste Ausgestaltung eines erfindungsgemäßen Thermometers 1 gezeigt. Dargestellt ist der mit dem Füllstoff 6 ausgefüllte Sensorkopf 3, innerhalb welchem ein Referenzelement 8 angeordnet ist. An dem Referenzelement 8 sind zumindest eine erste 11 und eine zweite 12 elektrisch leitfähige Elektrode angeordnet. Die beiden Elektroden 11,12 sind hier im Bereich der Oberfläche O des Referenzelements 8 auf demselben Oberflächenstück angeordnet und elektrisch voneinander isoliert. In einer anderen Ausgestaltung können die beiden Elektroden 11, 12 jedoch ebenfalls im Bereich unterschiedlicher Oberflächenstücke angeordnet sein. Ein erster Anschlussdraht 9a dient der, insbesondere elektrischen, Kontaktierung der ersten Elektrode 11 und ein zweiter Anschlussdraht 9b dient der elektrischen Kontaktierung der zweiten Elektrode 12. Die erste Elektrode 11 Ferner ist ferner durch eine dritte Anschlussleitung 9c, insbesondere elektrisch, kontaktiert. Die erste 9a und die dritte 9c Anschlussleitung bestehen dabei aus unterschiedlichen Materialien und bilden einen ersten erfindungsgemäßen Temperatursensor 13 in Form eines ersten Thermoelements. Mittels des ersten Temperatursensors 13 wird zu jedem Zeitpunkt die innerhalb des Sensorkopfes am Ort des Referenzelements 8 vorherrschende Temperatur ermittelt. Das Referenzelement 8 und der erste Temperatursensor 13 befinden sich also zu jedem Zeitpunkt vorteilhaft im thermischen Gleichgewicht.

Alternativ kann der erste Temperatursensor in analoger Weise auch durch die zweite 9b und dritte 9c Anschlussleitung gebildet werden. Ferner ist es nicht zwingend notwendig, dass die Messstelle 14 des Temperatursensors sich direkt an der jeweils kontaktierten Elektrode 11,12 befindet. Sie sollte sich jedoch idealerweise zumindest in unmittelbarer Umgebung des Referenzelements 8 befinden.

Eine zweite Ausgestaltung ist in Fig. 3 gezeigt. Hier umfasst die erfindungsgemäße Vorrichtung ergänzend zur Ausgestaltung gemäß Fig. 2 einen vierten Anschlussdraht 9d, welcher in dieser Ausgestaltung neben der zweiten Anschlussleitung 9b die zweite Elektrode 12, insbesondere elektrisch, kontaktiert. Die erste 9a und die dritte 9c Anschlussleitung bilden also wie gehabt den ersten Temperatursensor 13 in Form eines ersten Thermoelements, und die zweite 9b und vierte 9d Anschlussleitung bilden einen erfindungsgemäßen zweiten Temperatursensor 15 in Form eines zweiten Thermoelements. Es versteht sich von selbst, dass die Anschlussleitungen 9a-9d, welche jeweils ein Thermoelement bilden, beliebig permutierbar sind. Jedoch sollten jeweils zwei ein Thermoelement bildende Anschlussleitungen 9a-9d jeweils aus unterschiedlichen Materialien bestehen. Dies gilt analog und unabhängig von der Ausgestaltung gemäß Fig. 3 für Ausgestaltungen umfassend mehr als vier Anschlussleitungen 9a-9d.

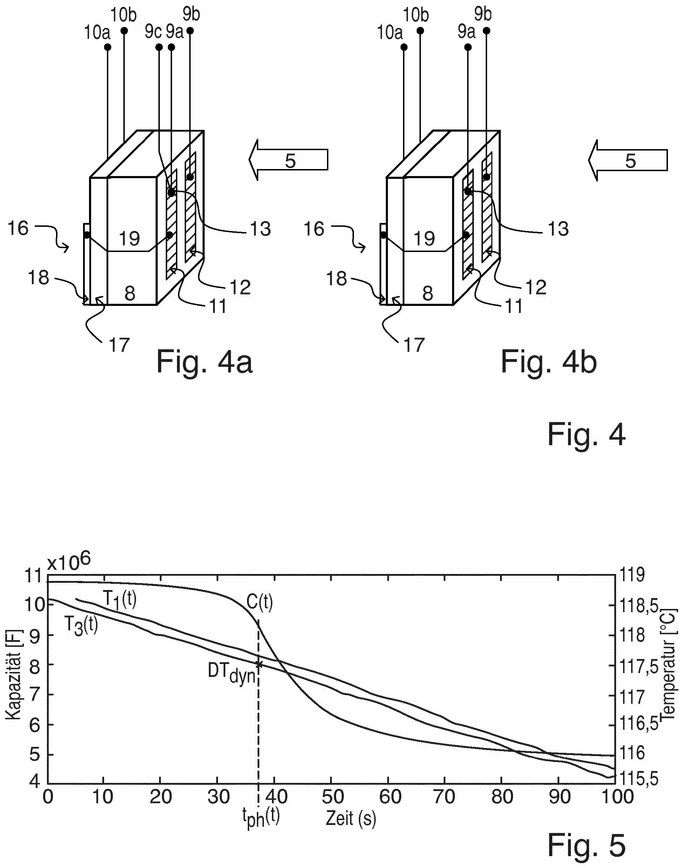

Zwei Varianten einer Ausgestaltung mit einem dritten Temperatursensor 16 ist schließlich in Fig. 4 gezeigt. Der Einfachheit halber ist der Sensorkopf 3 mit dem Füllstoff in dieser Ausgestaltung nicht dargestellt. Der dritte Temperatursensor 16 ist in der hier gezeigten Ausgestaltung gegeben durch ein auf einem Trägersubstrat 17 angeordnetes Widerstandselement 18, insbesondere ein sogenanntes PT100- oder PT1000- Element. Das Widerstandselement ist mittels eines fünften 10a und eines sechsten 10b Anschlussleitung, insbesondere elektrisch, kontaktiert. Eine Beschränkung der Anzahl der Anschlussleitungen 10a, 10b auf zwei zur Kontaktierung des dritten Temperatursensors 16 ist nicht zwingend notwendig. Vielmehr hängt sie von der Art des Temperatursensors und der jeweiligen Konstruktion der Vorrichtung 1 ab und ist entsprechend variabel.

Der dritte Temperatursensor 16, was ebenfalls nicht zwingend notwendig ist, für die Ausgestaltung gemäß Fig. 4a in direktem Kontakt zu dem Referenzelement 8 angeordnet. Ähnlich wie in der Ausgestaltung gemäß Fig. 2 weist das Referenzelement 8 gemäß Fig. 4a zwei Elektroden 11, 12 auf, welche durch eine erste 9a und zweite 9b Anschlussleitung kontaktiert sind. Die erste Anschlussleitung 9a bildet mittels der dritten Anschlussleitung 9c den ersten Temperatursensor 13 in Form eines ersten Thermoelements.

Für die gezeigte Ausgestaltung ist es zweckdienlich, die Temperatur mittels des dritten Temperatursensors 16 zu ermitteln, da Widerstandselemente in der Regel im Vergleich zu Thermoelementen eine deutlich geringere Messunsicherheit aufweisen. Der erste Temperatursensor 13, welcher im Wesentlichen derselben Temperatur wie die des Referenzelements 8 ausgesetzt ist, dient dann beispielsweise der Bestimmung eines dynamischen Temperaturunterschieds ΔT_{dyn,} welcher insbesondere in einem zumindest teilweisen und/oder zeitweisen dynamischen und/oder thermischen Umfeld zwischen dem dritten Temperatursensor 16 und dem Referenzelement 8 auftreten kann. Hierzu kann optional eine Verbindungsleitung 19 zwischen derjenigen der beiden Elektroden 11, welche durch zumindest einen das erste Thermoelement bildenden Anschlussdraht - hier 9a und 9c - kontaktiert wird, und dem dritten Temperatursensor 16 integriert werden.

Eine ähnliche Ausführung einer erfindungsgemäßen Ausgestaltung ist Gegenstand von Fig. 4b. Auf bereits erläuterte Elemente wird nicht erneut eingegangen. Im Unterschied zur Ausgestaltung gemäß Fig.4a ist für Fig. 4b die dritte Anschlussleitung 9c nicht separat [deswegen hier nicht sichtbar], sondern direkt als Verbindungsleitung 19 ausgestaltet. Vorteilhaft wird außer den Anschlussleitungen 9a,9b und 10a, 10b keine weitere Anschlussleitung von dem dritten Temperatursensor 16 oder dem Referenzelement 8 zur Elektronikeinheit 4 benötigt. Ferner kann in der Ausgestaltung gemäß Fig. 4b anhand der zwischen der ersten Anschlussleitung 9a und der fünften Anschlussleitung 10a auftretenden Thermospannung direkt der dynamische Temperaturunterschied ΔT_{dyn} bestimmt werden.

Auch für Ausgestaltungen wie in Fig. 4 sind Permutationen der Anschlussleitungen 9a-9c, 10a, 10b, 19 möglich, wobei gewährleistet sein muss, dass jeweils zwei ein Thermoelement bildende Anschlussleitungen 9a-9c, 10a, 10b, 19 aus unterschiedlichen Materialien, oder Legierungen, bestehen müssen. Zumindest die dritte 9c als Verbindungsleitung 19 ausgestaltete Anschlussleitung muss aus einem anderen Material bestehen als die anderen Anschlussleitungen 9a,9b, 10a, 10b.

Das Referenzelement 8 ist - ohne Beschränkung der Allgemeinheit für die hier gezeigten Ausgestaltungen gemäß der Figuren Fig. 2 - Fig. 4 in Form eines Kondensatorelements ausgebildet. Beim Über- oder Unterschreiten der Phasenübergangstemperatur findet eine sprungartige Änderung der Kapazität C des Referenzelements 8 statt, welche über die beiden Anschlussleitungen 9a, 9b detektierbar ist.

Fig. 5 zeigt zur Erläuterung einer Temperaturbestimmung bzw. einer Kalibrierung und/oder Validierung anhand einer Vorrichtung gemäß Fig. 4 die mittels des ersten Temperatursensors 13 ermittelte Temperatur T₁(t), die mittels des dritten Temperatursensors T₃(t) und die mittels des Referenzelements aufgezeichnete Kapazität C(t), jeweils als Funktion der Zeit. Zum Zeitpunkt tₚₕ findet ein Phasenübergang innerhalb des Referenzelements 8 bei der Phasenübergangstemperatur Tₚₕ statt. Zu diesem Zeitpunkt gilt für den ersten 13 und dritten 16 Temperatursensor T₁(tₚₕ)>T₃(tₚₕ), da der erste Temperatursensor 13 sich direkt an dem Referenzelement 8 befindet. Für ein in entgegengesetzte Richtung 5 strömendes Medium gelten diese Überlegungen analog. Nun sind zur Temperaturbestimmung verschiedene Möglichkeiten denkbar: Einerseits kann der Mittelwert der mittels des ersten 13 und dritten 16 Temperatursensors Temperaturen gebildet werden. Andererseits kann die der Temperaturunterschied ΔT_{dyn}= T₁(tₚₕ)-T₂(tₚₕ) gebildet werden, und von der mittels des dritten Temperatursensors 16 gemessenen Temperatur T₃(t) subtrahiert werden.

Zusammenfassend weist eine erfindungsgemäße Vorrichtung folgende Vorteile auf: Das Referenzelement 8 und zumindest der erste Temperatursensor 13, oder der erste 13 und zweite 15 Temperatursensor sind jeweils in unmittelbarer Umgebung zum Referenzelement angeordnet und im Wesentlichen zu jedem Zeitpunkt im thermischen Gleichgewicht. Ein Thermoelement zeichnet sich ferner durch eine sehr geringe Masse aus, so dass ein Einfluss auf das thermodynamische Verhalten des Sensorkopfes 3 durch ein in Form eines Thermoelements ausgestalteten Temperatursensor 13, 15 minimal ist. Die Erfindung zeichnet sich durch einen besonders einfachen konstruktiven Aufbau mit zumindest drei Anschlussleitungen 9a-9c aus. Auch bei Integration eines dritten Temperatursensors 16 einer anderen Gattung, insbesondere in Form eines Widerstandselements lassen sich negative Einflüsse auf die Messungenauigkeit, insbesondere in einem zumindest zeitweise und/oder teilweise dynamischen und/oder inhomogenen thermischen Umfeld eliminieren.

### Bezugszeichenliste

- 1: Thermometereinsatz
- 2: Schutzrohr
- 3: Sensorkopf
- 4: Elektronikeinheit
- 5: Medium
- 6: Füllstoff
- 7: Temperatursensor
- 8: Referenzelement
- 9,9a-9d: Anschlussleitungen des Referenzelements
- 10: Anschlussleitungen des Temperatursensors
- 11: Erste Elektrode
- 12: Zweite Elektrode
- 13: Erster Temperatursensor
- 14: Messpunkt
- 15: Zweiter Temperatursensor
- 16: Dritter Temperatursensor
- 17: Trägersubstrat
- 18: Widerstandselement
- 19: Verbindungsleitung
- O: Oberfläche des Referenzelements
- W: Wärmeausbreitung innerhalb des Sensorkopfes
- T, T₁, T₂, T₃: erste, zweite, dritte Temperatur
- C: Kapazität des Referenzelements
- T_{Ph}: Phasenübergangstemperatur
- tₚₕ: Phasenübergangs-Zeitpunkt tₚₕ
- t: Zeit
- Δt_{dyn}: Dynamischer Temperaturunterschied zwischen ersten und zweitem Temperatursensor

## Patentansprüche

1. Vorrichtung (1) zur Bestimmung und/oder Überwachung der Temperatur (T) eines Mediums (5) umfassend zumindest
- einen ersten Temperatursensor (13) zur Bestimmung der Temperatur (T) des Mediums (5),
- ein Referenzelement (8) zur in situ Kalibrierung und/oder Validierung der Vorrichtung (1),
welches Referenzelement (8) zumindest teilweise aus einem Material besteht, für welches Material innerhalb des für den Betrieb der Vorrichtung (1) relevanten Temperaturbereichs zumindest ein Phasenübergang bei zumindest einer vorgegebenen Phasenübergangstemperatur (T_{Ph}) auftritt, bei welchem Phasenübergang das Material in der festen Phase verbleibt,
wobei an dem Referenzelement (8) zumindest eine erste (11) und eine zweite (12) elektrisch leitfähige Elektrode angeordnet sind, welche erste (11) und zweite Elektrode (12) elektrisch voneinander isoliert sind,
- eine erste Anschlussleitung (9a) zur, insbesondere elektrischen, Kontaktierung der ersten Elektrode (11) des Referenzelements (8), und
- eine zweite Anschlussleitung (9b) zur, insbesondere elektrischen, Kontaktierung der zweiten Elektrode (12) des Referenzelements (8),
**gekennzeichnet dadurch, dass**
- eine dritte Anschlussleitung (9c) vorgesehen ist, welche aus einem Material besteht, welches sich zumindest von dem Material der ersten (9a) oder der zweiten Anschlussleitung (9b) unterscheidet, und
- wobei die dritte Anschlussleitung (9c) derart angeordnet ist, dass sie mit der ersten (9a), oder der zweiten (9b) Anschlussleitung, den ersten Temperatursensor (13) in Form eines ersten Thermoelements bildet.

2. Vorrichtung (1) nach Anspruch 1,
wobei es sich bei dem zumindest einen Material, aus welchem das Referenzelement (8) zumindest teilweise besteht, um ein ferroelektrisches Material, um ein ferromagnetisches Material, oder um ein supraleitendes Material, insbesondere einen Hochtemperatursupraleiter, handelt.

3. Vorrichtung (1) nach Anspruch 1,
wobei es sich bei dem zumindest einen Material, aus welchem das Referenzelement (8) zumindest teilweise besteht, um eine Legierung, insbesondere um LiNbO3, NaNbO3, KNO3, Pb(0.5Sc0.5Nb)O3,
Pb(0.33Mg0.67Nb)O3,Pb(0.33Zn0.67Nb)O3, LiTaO3, PbTa2O6,
Pb(0.5Fe0.5Ta)O3, SrBi2Ta2O9, Sm(MoO4)3, Eu2(MoO4)3, Pb5GeO11, SrTeO3, PbZrO3-PbTiO3, BaTiO3, oder einen Mischkristall, beispielsweise BaTiO3-PbTiO3, handelt.

4. Vorrichtung (1) nach zumindest einem der vorhergehenden Ansprüche,
wobei die dritte Anschlussleitung (9c) derart angeordnet ist, dass sie mit der ersten (11) oder zweiten (12) Elektrode, insbesondere elektrisch, kontaktiert ist.

5. Vorrichtung (1) nach zumindest einem der vorhergehenden Ansprüche,
wobei eine vierte Anschlussleitung (9d) vorgesehen ist, welche aus einem Material besteht, welches sich zumindest von dem Material der ersten (9a) oder der zweiten (9b) Anschlussleitung unterscheidet,
wobei die vierte (9d) Anschlussleitung im Falle, dass die dritte (9c) Anschlussleitung die erste Elektrode (11) kontaktiert, die zweite Elektrode (12), insbesondere elektrisch, kontaktiert, und im Falle, dass die dritte Anschlussleitung (9c) die zweite Elektrode (12) kontaktiert, die erste Elektrode (11), insbesondere elektrisch, kontaktiert,
und wobei die beiden (9a,9c bzw. 9b,9d) jeweils die gleiche Elektrode (11,12), insbesondere elektrisch, kontaktierenden Anschlussleitungen den ersten Temperatursensor (13) in Form des ersten Thermoelements und einen zweiten Temperatursensor (15) in Form eines zweiten Thermoelements bilden.

6. Vorrichtung (1) nach zumindest einem der vorhergehenden Ansprüche,
wobei zumindest ein dritter Temperatursensor (16) mit zumindest einer fünften Anschlussleitung (10a, 10b) zur elektrischen Kontaktierung des dritten Temperatursensors (16), welcher dritte Temperatursensor (16) der Bestimmung der Temperatur (T) des Mediums (5) dient, vorgesehen ist.

7. Vorrichtung (1) nach Anspruch 6,
wobei es sich bei dem dritten Temperatursensor (16) um ein Widerstandselement handelt.

8. Vorrichtung (1) nach Anspruch 6 oder 7,
wobei der dritte Temperatursensor (16) und das zumindest eine Referenzelement (8) in einem einzigen Sensorkopf (3) angeordnet sind.

9. Vorrichtung (1) nach zumindest einem Ansprüche 6-8,
wobei die dritte Anschlussleitung (9c) als Verbindungsleitung (19), welche eine der beiden Elektroden (11,12) und den dritten Temperatursensor (16), insbesondere elektrisch, kontaktiert, ausgestaltet ist.

10. Vorrichtung nach Anspruch 9,
wobei die dritte Anschlussleitung (9c) aus dem gleichen Material besteht wie die fünfte (10a, 10b), die erste (9a), oder die zweite (9b) Anschlussleitung.

11. Verfahren zur in situ Kalibrierung und/oder Validierung einer Vorrichtung (1) nach zumindest einem der vorhergehenden Ansprüche,
umfassend zumindest folgende Verfahrensschritte:
- Ermitteln zumindest eines Phasenübergangs-Zeitpunkts (tₚₕ), zu welchem zumindest eine Phasenübergangstemperatur (T_{Ph}) des Referenzelements (8) erreicht wird,
- Ermitteln eines ersten mittels des ersten Temperatursensors (13) gemessenen ersten Temperatur-Messwerts (T₁), welcher zu einem ersten Mess-Zeitpunkt (t₁) gemessen wird/wurde, der den kürzesten zeitlichen Abstand zum Phasenübergangs-Zeitpunkt (tₚₕ) aufweist, und
- Kalibrierung und/oder Validierung des ersten Temperatursensors (13) anhand eines Vergleichs der zumindest einen Phasenübergangstemperatur (T_{Ph}) mit dem ersten Temperatur-Messwert (T₁).

12. Verfahren nach Anspruch 11 zur in situ Kalibrierung einer Vorrichtung (1) nach Anspruch 4, umfassend folgende Verfahrensschritte:
- Ermitteln zumindest eines Phasenübergangs-Zeitpunkts (tₚₕ), zu welchem zumindest eine Phasenübergangstemperatur (Tₚₕ) des Referenzelements (8) erreicht wird,
- Ermitteln eines ersten mittels des ersten Temperatursensors (13) gemessenen ersten Temperatur-Messwerts (T₁), welcher zu einem ersten Mess-Zeitpunkt (t₁) gemessen wird/wurde, der den kürzesten zeitlichen Abstand zum Phasenübergangs-Zeitpunkt (tₚₕ) aufweist,
- Ermitteln eines mittels des zweiten Temperatursensors (15) gemessenen zweiten Temperatur-Messwerts (T₂), welcher zu einem zweiten Mess-Zeitpunkt (t₂) gemessen wird/wurde, der den kürzesten zeitlichen Abstand zum Phasenübergangs-Zeitpunkt (tₚₕ) aufweist,
- Kalibrierung und/oder Validierung des zweiten Temperatursensors (15) anhand eines Vergleichs der zumindest einen Phasenübergangstemperatur (T_{Ph}) mit dem ersten (T₁) und/oder zweiten (T₂) Temperatur-Messwert, und
- Bestimmen der Temperatur (T) des Mediums (5) anhand des ersten (T₁) und/oder zweiten (T₂) Temperatur-Messwerts oder anhand eines Mittelwerts des ersten (T₁) und zweiten (T₂) Temperatur-Messwerts.

13. Verfahren nach Anspruch 12 zur in situ Kalibrierung einer Vorrichtung (1) nach zumindest einem der Ansprüche 5-9, umfassend folgende Verfahrensschritte:
- Ermitteln zumindest eines Phasenübergangs-Zeitpunkts (tₚₕ), zu welchem zumindest eine Phasenübergangstemperatur (T_{Ph}) des Referenzelements (8) erreicht wird,
- Ermitteln eines ersten mittels des ersten Temperatursensors (13) gemessenen ersten Temperatur-Messwerts (T₁), welcher zu einem ersten Mess-Zeitpunkt (t₁) gemessen wird/wurde, der den kürzesten zeitlichen Abstand zum Phasenübergangs-Zeitpunkt (tₚₕ) aufweist, und/oder
Ermitteln eines mittels des zweiten Temperatursensors (15) gemessenen zweiten Temperatur-Messwerts (T₂), welcher zu einem zweiten Mess-Zeitpunkt (t₂) gemessen wird/wurde, der den kürzesten zeitlichen Abstand zum Phasenübergangs-Zeitpunkt (tₚₕ) aufweist,
- Ermitteln eines mittels des dritten Temperatursensors (16) gemessenen dritten Temperatur-Messwerts (T₃), welcher zu einem dritten Mess-Zeitpunkt (t₃) gemessen wird/wurde, der den kürzesten zeitlichen Abstand zum Phasenübergangs-Zeitpunkt (tₚₕ) aufweist,
- Kalibrierung und/oder Validierung des dritten Temperatursensors (16) anhand eines Vergleichs der zumindest einen Phasenübergangstemperatur (T_{Ph}) mit dem ersten (T₁), zweiten (T₂) und/oder dritten (T₃) Temperatur-Messwert, und
- Bestimmen der Temperatur (T) des Mediums (5) anhand des ersten (T₁) zweiten (T₂) und/oder dritten (T₃) Temperatur-Messwerts oder anhand eines Mittelwerts des ersten (T₁), zweiten (T₂) und/oder dritten (T₃) Temperatur-Messwerts.

14. Verfahren nach Anspruch 12 und 13,
wobei zur Kalibrierung und/oder Validierung des dritten Temperatursensors (16) anhand eines Vergleichs der zumindest einen Phasenübergangstemperatur(Tₚₕ) mit dem dritten Temperatur-Messwert (T₃) eine gegebenenfalls bestehende Abweichung zwischen dem mittels des ersten (13) und/oder zweiten (15) Temperatursensors gemessenen ersten (T1) und/oder zweiten (T2) Temperatur-Messwerts berücksichtigt wird.

## Claims

1. Apparatus (1) for determining and/or monitoring the temperature (T) of a medium (5) comprising at least
- a first temperature sensor (13) for determining the temperature (T) of the medium (5),
- a reference element (8) for the in situ calibration and/or validation of the apparatus (1),
wherein said reference element (8) is made at least partially from a material for which, within the temperature range that is relevant for the operation of the apparatus (1), at least a phase shift occurs at least at a predefined phase shift temperature (T_{Ph}) and the material remains in the solid phase at said phase shift, wherein at least a first (11) and a second (12) electrically conductive electrode are arranged on the reference element (8), wherein said first (11) and second (12) electrode are electrically isolated from one another,
- a first connecting cable (9a) to contact, particularly electrically, the first electrode of the reference element (8), and
- a second connecting cable (9b) to contact, particularly electrically, the second electrode (12) of the reference element (8),
**characterized in that**
- a third connecting cable (9c) is provided, which is made from a material which is different at least from the material of the first (9a) or the second (9b) connecting cable, and
- wherein the third connecting cable (9c) is arranged in such a way that, with the first (9a) or the second (9b) connecting cable, it forms the first temperature sensor (13) in the form of a first thermocouple.

2. Apparatus (1) as claimed in Claim 1,
wherein the at least one material from which the reference element (8) is at least partially made is a ferroelectric material, a ferromagnetic material or a supraconductor material, particularly a high-temperature supraconductor.

3. Apparatus (1) as claimed in Claim 1,
wherein the at least one material from which the reference element (8) is at least partially made is an alloy, particularly LiNbO3, NaNbO3,
KNO3, Pb(0.5Sc0.5Nb)O3,
Pb(0.33Mg0.67Nb)O3, Pb(0.33Zn0.67Nb)O3, LiTaO3, PbTa2O6, Pb(0.5Fe0.5Ta)O3, SrBi2Ta2O9, Sm(MoO4)3, Eu2(MoO4)3, Pb5GeO11, SrTeO3,
PbZrO3-PbTiO3, BaTiO3, or a solid solution, for example BaTiO3-PbTiO3.

4. Apparatus (1) as claimed in at least one of the previous claims,
wherein the third connecting cable (9c) is arranged in a way that it contacts, particularly electrically, the first (11) or the second (12) electrode.

5. Apparatus (1) as claimed in at least one of the previous claims,
wherein a fourth connecting cable (9d) is provided, which is made from a material that is at least different to the material of the first (9a) or of the second (9b) connecting cable, wherein, in the event that the third connecting cable (9c) contacts the first electrode (11), the fourth (9d) connecting cable contacts the second electrode (12), particularly electrically, and in the event that the third connecting cable (9c) contacts the second electrode (12), it contacts the first electrode (11), particularly electrically, and wherein the two (9a, 9c or 9b, 9d) connecting cables each contacting the same electrode (11, 12), particularly electrically, form the first temperature sensor (13) in the form of the first thermocouple and a second temperature sensor (15) in the form of a second thermocouple.

6. Apparatus (1) as claimed in at least one of the previous claims,
wherein at least a third temperature sensor (16) is provided with at least a fifth connecting cable (10a, 10b) to electrically contact the third temperature sensor (16), wherein said third temperature sensor (16) serves to determine the temperature (T) of the medium (5).

7. Apparatus (1) as claimed in Claim 6,
wherein the third temperature sensor (16) is a resistor element.

8. Apparatus (1) as claimed in Claim 6 or 7,
wherein the third temperature sensor (16) and the at least one reference element (8) are arranged in a single sensor head (3).

9. Apparatus (1) as claimed in at least one of the Claims 6 to 8,
wherein the third connecting cable (9c) is designed as a connecting cable (19) which contacts, particularly electrically, one of the two electrodes (11, 12) and the third temperature sensor (16).

10. Apparatus (1) as claimed in Claim 9,
wherein the third connecting cable (9c) is made from the same material as the fifth (10a, 10b), the first (9a), or the second (9b) connecting cable.

11. Procedure for the in situ calibration and/or validation of an apparatus (1) as claimed in at least one of the previous claims,
wherein said procedure comprises at least the following steps:
- Determination of at least a phase shift time (tₚₕ) at which at least a phase shift temperature (T_{Ph}) of the reference element (8) is reached,
- Determination of a first temperature measured value (T₁) measured using the first temperature sensor (13), which is/has been measured at a first measuring time (t₁) which represents the shortest distance in time to the phase shift time (tₚₕ), and
- Calibration and/or validation of the first temperature sensor (13) using a comparison of the at least one phase shift temperature (T_{Ph}) with the first temperature measured value (T₁).

12. Procedure as claimed in Claim 11 designed for in situ calibration of an apparatus (1) as claimed in Claim 4, wherein said procedure comprises the following steps:
- Determination of at least a phase shift time (tₚₕ) at which at least a phase shift temperature (T_{Ph}) of the reference element (8) is reached,
- Determination of a first temperature measured value (T₁) measured using the first temperature sensor (13), wherein said value is/has been measured at a first measuring time (t₁) which represents the shortest distance in time to the phase shift time (tₚₕ),
- Determination of a second temperature measured value (T₂) measured using the second temperature sensor (15), wherein said value is/has been measured at a second measuring time (t₂) which represents the shortest distance in time to the phase shift time (tₚₕ),
- Calibration and/or validation of the second temperature sensor (15) using a comparison of the at least one phase shift temperature (T_{Ph}) with the first (T₁) and/or the second (T₂) temperature measured value, and
- Determination of the temperature (T) of the medium (5) using the first (T₁) and/or the second (T₂) temperature measured value or using a mean value of the first (T₁) and of the second (T₂) temperature measured value.

13. Procedure as claimed in Claim 12 designed for in situ calibration of an apparatus (1) as claimed in at least one of the Claims 5 to 9, comprising the following procedural steps:
- Determination of at least a phase shift time (tₚₕ) at which at least a phase shift temperature (T_{Ph}) of the reference element (8) is reached,
- Determination of a first temperature measured value (T₁) measured using the first temperature sensor (13), wherein said value is/has been measured at a first measuring time (t₁) which represents the shortest distance in time to the phase shift time (tₚₕ), and/or
- Determination of a second temperature measured value (T₂) measured using the second temperature sensor (15), wherein said value is/has been measured at a second measuring time (t₂) which represents the shortest distance in time to the phase shift time (tₚₕ),
- Determination of a third temperature measured value (T₃) measured using the third temperature sensor (16), wherein said value is/has been measured at a third measuring time (t₃) which represents the shortest distance in time to the phase shift time (tₚₕ),
- Calibration and/or validation of the third temperature sensor (16) using a comparison of the at least one phase shift temperature (T_{Ph}) with the first (T₁), the second (T₂) and/or the third (T₃) temperature measured value, and
- Determination of the temperature (T) of the medium (5) using the first (T₁), the second (T₂) and/or the third (T₃) temperature measured value or using a mean value of the first (T₁), the second (T₂) and/or the third (T₃) temperature measured value.

14. Procedure as claimed in Claim 12 and 13,
wherein, for the calibration and/or the validation of the third temperature sensor (16) using a comparison of the at least one phase shift temperature (T_{Ph}) with the third temperature measured value (T₃), any deviation between the first (T₁) and/or the second (T₂) temperature measured value, measured using the first (13) and/or the second (15) temperature sensor is taken into account.

## Revendications

1. Dispositif (1) destiné à la détermination et/ou la surveillance de la température (T) d'un produit (5) comprenant au moins
- un premier capteur de température (13) destiné à déterminer la température (T) du produit (5),
- un élément de référence (8) destiné à l'étalonnage sur site et/ou à la validation du dispositif (1),
lequel élément de référence (8) est constitué au moins partiellement d'un matériau pour lequel, à l'intérieur de la gamme de température pertinente pour le fonctionnement du dispositif (1), il se produit au moins une transition de phase à au moins une température de transition de phase (T_{Ph}) prédéfinie, transition de phase lors de laquelle le matériau reste en phase solide,
au moins une première (11) et une deuxième (12) électrodes électriquement conductrices étant disposées sur l'élément de référence (8), lesquelles première (11) et deuxième (12) électrodes sont électriquement isolées l'une de l'autre,
- un premier conducteur de raccordement (9a) pour la mise en contact, notamment électrique, avec la première électrode de l'élément de référence (8), et
- un deuxième conducteur de raccordement (9b) pour la mise en contact, notamment électrique, avec la deuxième électrode (12) de l'élément de référence (8),
**caractérisé en ce**
- **qu'**il est prévu un troisième conducteur de raccordement (9c), lequel est constitué d'un matériau qui diffère au moins du matériau du premier (9a) ou du deuxième (9b) conducteur de raccordement, et
- le troisième conducteur de raccordement (9c) étant disposé de telle sorte qu'il forme avec le premier (9a) ou le deuxième (9b) conducteur de raccordement le premier capteur de température (13) sous la forme d'un premier thermocouple.

2. Dispositif (1) selon la revendication 1,
pour lequel il s'agit, concernant l'au moins un matériau dont l'élément de référence (8) est au moins partiellement constitué, d'un matériau ferroélectrique, d'un matériau ferromagnétique ou d'un matériau supraconducteur, notamment d'un supraconducteur à haute température.

3. Dispositif (1) selon la revendication 1,
pour lequel il s'agit, concernant l'au moins un matériau dont l'élément de référence (8) est au moins partiellement constitué, d'un alliage, notamment de LiNbO3, NaNbO3,
KNO3, Pb(0.5Sc0.5Nb)O3,
Pb(0.33Mg0.67Nb)O3, Pb(0.33Zn0.67Nb)O3, LiTaO3, PbTa2O6, Pb(0.5Fe0.5Ta)O3, SrBi2Ta2O9, Sm(MoO4)3, Eu2(MoO4)3, Pb5GeO11, SrTeO3,
PbZrO3-PbTiO3, BaTiO3, ou un cristal mixte, par exemple BaTiO3-PbTiO3.

4. Dispositif (1) selon au moins l'une des revendications précédentes,
pour lequel le troisième conducteur de raccordement (9c) est disposé de manière à être en contact, notamment électrique, avec la première (11) ou la deuxième (12) électrode.

5. Dispositif (1) selon au moins l'une des revendications précédentes,
pour lequel il est prévu un quatrième conducteur de raccordement (9d), lequel est constitué d'un matériau qui diffère au moins du matériau du premier (9a) ou du deuxième (9b) conducteur de raccordement, le quatrième (9d) conducteur de raccordement étant, dans le cas où le troisième conducteur de raccordement (9c) met en contact la première électrode (11), met en contact la deuxième électrode (12), notamment électriquement, et dans le cas où le troisième conducteur de raccordement (9c) met en contact la deuxième électrode (12), met en contact la première électrode (11), notamment électriquement, et les deux (9a, 9c ou 9b, 9d) mettant en contact respectivement la même électrode (11, 12), notamment électriquement, constituent le premier capteur de température (13) sous la forme du premier thermocouple et un deuxième capteur de température (15) sous la forme d'un deuxième thermocouple.

6. Dispositif (1) selon au moins l'une des revendications précédentes,
pour lequel il est prévu au moins un troisième capteur de température (16) avec au moins un cinquième conducteur de raccordement (10a, 10b) pour la mise en contact électrique du troisième capteur de température (16), lequel troisième capteur de température (16) sert à déterminer la température (T) du produit (5).

7. Dispositif (1) selon la revendication 6,
pour lequel le troisième capteur de température (16) est un élément résistif.

8. Dispositif (1) selon la revendication 6 ou 7,
pour lequel le troisième capteur de température (16) et l'au moins un élément de référence (8) sont disposés dans une unique tête de capteur (3).

9. Dispositif (1) selon au moins l'une des revendications 6 à 8,
pour lequel le troisième conducteur de raccordement (9c) est conçu comme un conducteur de liaison (19) qui met en contact, notamment électrique, l'une des deux électrodes (11, 12) et le troisième capteur de température (16).

10. Dispositif (1) selon la revendication 9,
pour lequel le troisième conducteur de raccordement (9c) est constitué du même matériau que le cinquième (10a, 10b), le premier (9a), ou le deuxième (9b) conducteur de raccordement.

11. Procédé destiné à l'étalonnage sur site et/ou à la validation d'un dispositif (1) selon au moins l'une des revendications précédentes,
lequel procédé comprend les étapes suivantes :
- Détermination d'au moins un instant de transition de phase (tₚₕ) auquel au moins une température de transition de phase (T_{Ph}) de l'élément de référence (8) est atteinte,
- Détermination d'une première valeur mesurée de température (T₁) mesurée au moyen du premier capteur de température (13), laquelle valeur est/a été mesurée à un premier instant de mesure (t₁) qui présente l'écart temporel le plus court par rapport à l'instant de transition de phase (tₚₕ), et
- Etalonnage et/ou validation du premier capteur de température (13) à l'aide d'une comparaison de l'au moins une température de transition de phase (T_{Ph}) avec la première valeur mesurée de température (T₁).

12. Procédé selon la revendication 11 destiné à l'étalonnage sur site d'un dispositif (1) selon la revendication 4, lequel procédé comprend les étapes suivantes :
- Détermination d'au moins un instant de transition de phase (tₚₕ) auquel au moins une température de transition de phase (T_{Ph}) de l'élément de référence (8) est atteinte,
- Détermination d'une première valeur mesurée de température (T₁) mesurée au moyen du premier capteur de température (13), laquelle valeur est/a été mesurée à un premier instant de mesure (t₁) qui présente l'écart temporel le plus court par rapport à l'instant de transition de phase (tₚₕ),
- Détermination d'une deuxième valeur mesurée de température (T₂) mesurée au moyen du deuxième capteur de température (15), laquelle valeur est/a été mesurée à un deuxième instant de mesure (t₂) qui présente l'écart temporel le plus court par rapport au moment de transition de phase (tₚₕ),
- Étalonnage et/ou validation du deuxième capteur de température (15) à l'aide d'une comparaison de l'au moins une température de transition de phase (T_{Ph}) avec la première (T₁) et/ou la deuxième (T₂) valeur mesurée de température, et
- Détermination de la température (T) du produit (5) à l'aide de la première (T₁) et/ou de la deuxième (T₂) valeur mesurée de température ou à l'aide d'une valeur moyenne de la première (T₁) et de la deuxième (T₂) valeur mesurée de température.

13. Procédé selon la revendication 12 destiné à l'étalonnage sur site d'un dispositif (1) selon au moins l'une des revendications 5 à 9, comprenant les étapes de procédé suivantes :
- Détermination d'au moins un instant de transition de phase (tₚₕ) auquel au moins une température de transition de phase (T_{Ph}) de l'élément de référence (8) est atteinte,
- Détermination d'une première valeur mesurée de température (T₁) mesurée au moyen du premier capteur de température (13), laquelle valeur est/a été mesurée à un premier instant de mesure (t₁) qui présente l'écart temporel le plus court par rapport à l'instant de transition de phase (tₚₕ), et/ou
- Détermination d'une deuxième valeur mesurée de température (T₂) mesurée au moyen du deuxième capteur de température (15), laquelle valeur est/a été mesurée à un deuxième instant de mesure (t₂) qui présente l'écart temporel le plus court par rapport à l'instant de transition de phase (tₚₕ),
- Détermination d'une troisième valeur mesurée de température (T₃) mesurée au moyen du troisième capteur de température (16), laquelle valeur est/a été mesurée à un troisième instant de mesure (t₃) qui présente l'écart temporel le plus court par rapport à l'instant de transition de phase (tₚₕ),
- Étalonnage et/ou validation du troisième capteur de température (16) à l'aide d'une comparaison de l'au moins une température de transition de phase (T_{Ph}) avec la première (T₁), la deuxième (T₂) et/ou la troisième (T₃) valeur mesurée de température, et
- Détermination de la température (T) du produit (5) à l'aide de la première (T₁), de la deuxième (T₂) et/ou de la troisième (T₃) valeur mesurée de température ou à l'aide d'une valeur moyenne de la première (T₁), de la deuxième (T₂) et/ou de la troisième (T₃) valeur mesurée de température.

14. Procédé selon les revendications 12 et 13,
pour lequel, en vue de l'étalonnage et/ou de la validation du troisième capteur de température (16) à l'aide d'une comparaison de l'au moins une température de transition de phase (T_{Ph}) avec la troisième valeur mesurée de température (T₃), on tient compte d'un écart existant éventuellement entre la première (T₁) et/ou la deuxième (T₂) valeur mesurée de température, mesurées respectivement au moyen du premier (13) et/ou du deuxième (15) capteur de température.
